# EUROPEAN PATENT APPLICATION

(11) **EP 3 378 680 A1**
(43) Date of publication of application: **26.09.2018**
(21) Application number: 18153533.7
(22) Date of filing: 25.01.2018
(51) Int. Cl.: B60C 19/00, B60C 19/12, C08G 101/00

(54) **PNEUMATIC TIRE WITH REDUCED TIRE NOISE**

(30) Priority: 23.03.2017 KR 20170036896
(71) Applicant: Hankook Tire Co., Ltd., Seoul 135-723 (KR)
(72) Inventor: Seo, Byeong Ho, 34127 Daejeon (KR)
(74) Representative: Petraz, Gilberto Luigi

(57) **Abstract**

Disclosed is a pneumatic tire for reducing noise that can more effectively reduce cavity noise energy, which is generated by vibration of air filling the tire upon rotation of the tire resulting from car driving, and a frequency generated thereby.

Provided is a pneumatic tire with reduced cavity noise including a porous sound-absorbing material adhered by an adhesive agent layer to an inside surface of an inner liner disposed in a tread layer in the tire,
wherein the sound-absorbing material is continuously extended in a circumferential direction in the tire and is disposed such that an adhesion starting point finally contacts an adhesion end point, or is spaced from the adhesion end point so as to face each other, the sound-absorbing material has an open cell on a surface thereof, a volume of the sound-absorbing material is 14% to 26% with respect to a total volume of the tire, wherein the total volume of the tire is defined as a volume of an area extending from a bottom surface of a tread to under a rim, and a maximum width of the sound-absorbing material is 35% to 60% with respect to a width of the tire tread and a surface area of the sound-absorbing material is 10% to 50% with respect to a surface area of the rim of a wheel on the surface of the inner liner to which the sound-absorbing material is adhered.

In accordance with the present invention, there is an advantage of more effectively reducing noise in tires by changing a noise energy causing resonance and a frequency generated by the energy.

## Description

### BACKGROUND OF THE INVENTION

### Field of the Invention

The present invention relates to a pneumatic tire, and more particularly, to a pneumatic tire for reducing noise that can more effectively reduce cavity noise energy, which is generated by vibration of air filling the tire upon rotation of the tire resulting from car driving, and a frequency generated thereby, by adhering a sound absorber for reducing noise having a certain size and shape to an inner liner in the tire.

### Description of the Related Art

With strengthened government regulations on vehicle noise and increasing demand for electric vehicles, the need for reducing noise from tires is gradually increasing. However, in accordance with recent development trends, UHP (ultra high performance) tires having a configuration in which a tread contacting tire pavement is formed at a large width and a side wall corresponding to a side surface of the tire has a low aspect ratio are drawing a great deal of attention. In the case of such tires, since the strength of the side wall is increased due to structural properties thereof, the tires cannot properly perform their function of damping shock transferred from the road, thus causing an increase in sound pressure related to noise generation.

In general, a pneumatic tire is filled with air, so that it absorbs vibration caused by irregular pavement to improve durability of vehicles and give passengers comfort. In addition, a tread pattern including a plurality of grooves is formed on the tread contacting the pavement in the tire to improve steering and driving performance of vehicles.

However, a tire is excited according to ins and outs, (roughness) and the surface of the road during driving, and the excited tire results in movement of air in the assembly of wheels and tires (tire cavity). Movement of air in the assembly of wheels and tires causes noise. The area formed by the assembly of the wheel and the tire acts as a resonance tube, thus causing a cavity resonance. Such noise is further amplified.

Such air vibration is generated in a cavity of a tire, so that noise is transferred to the inside of the vehicle and is then detected by a driver, which eventually deteriorates ride comfort (hereinafter, noise caused by air vibration will be broadly called "cavity noise"). Accordingly, tire manufacturers have suggested tires which can reduce generation of noise in the tires using polyurethane foams having open cells.

Specifically, Korean Patent Laid-open No. 10-2015-0123684 (Patent Document 1) discloses methods for greatly reducing cavity noise by setting a ratio between a cross-sectional area of an area formed by an inner surface of the tire and a cross-sectional area of a sound-absorbing material at 23% to 29% and Japanese Patent No. 3964878 (Patent Document 2) discloses that a ratio of a volume of a sound-absorbing material to an inner volume of a tire is in the range of 0.4% to 20%.

### [Prior Art Document]

1. Korean Patent Laid-open No. 2015-0123684 (publication date: 2015. 11. 4.)
2. Japanese Patent Publication Laid-open No. 3964878 (publication date: 2004. 3. 16.)

### SUMMARY OF THE INVENTION

Therefore, the present invention has been made in order to more effectively reduce cavity noise generated by air vibration, which is one form of tire noise, and it is one object of the present invention to provide a pneumatic tire for reducing cavity noise that can more effectively reduce noise in the tire by changing a noise energy causing resonance and a frequency generated by the energy by adhering a sound absorber having a certain size and shape to an inner part of the tire.

In accordance with the present invention, the above and other objects can be accomplished by the provision of a pneumatic tire with reduced cavity noise including a porous sound-absorbing material adhered by an adhesive agent layer to an inside surface of an inner liner disposed in a tread layer in the tire, wherein the sound-absorbing material is continuously extended in a circumferential direction in the tire and is disposed such that an adhesion starting point finally contacts an adhesion end point, or is spaced from the adhesion end point so as to face each other, the sound-absorbing material has an open cell on a surface thereof, a volume of the sound-absorbing material is 14% to 26% with respect to the total volume of the tire, wherein the total volume of the tire is defined as a volume of an area extending from a bottom surface of a tread to under a rim, and a maximum width of the sound-absorbing material is 35% to 60% with respect to a width of the tire tread and a surface area of the sound-absorbing material is 10% to 50% with respect to a surface area of the rim of a wheel on the surface of the inner liner to which the sound-absorbing material is adhered.

Preferably, the sound-absorbing material may include an open cell on the surface thereof and the open cell may have a size of 500 µm to 1,300 µm and a thickness (depth) of 20 µm to 100 µm.

A top surface of the sound-absorbing material may have a height which is regularly or irregularly disposed in a width or length direction with respect to a circumferential direction, in which the tire rotates, so that cavity noise of the tire can be more effectively reduced.

That is, the sound-absorbing material may have a flat bottom surface (inner liner surface) and a top surface which has a plurality of ridges and valleys regularly or irregularly arranged and alternately disposed in a circumferential direction, in which the tire rotates, wherein the highest points of the ridges and the lowest points of the valleys are equal distances from a central height line of variation, so that the sound-absorbing material has the same volume, but has an irregular top surface where air flows.

The sound-absorbing material may have a flat bottom surface (inner liner surface) and a top surface which has alternately disposed ridges and valleys with different heights in a left or right diagonal line direction with respect to the circumferential direction, in which the tire rotates, so that cavity noise generated by impact of the tire during driving can be reduced on the surface of the sound-absorbing material with irregular heights.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a side-sectional view illustrating a pneumatic tire with reduced noise according to an embodiment of the present invention;
FIG. 2A is a perspective view of a pneumatic tire with reduced noise according to a first embodiment of the present invention, FIG. 2B is a cross-sectional view of a pneumatic tire with reduced noise according to a first embodiment of the present invention, and FIG. 2C is a partial side-sectional view of a pneumatic tire with reduced noise according to a first embodiment of the present invention;
FIG. 3A is a partial perspective view illustrating a sound-absorbing material of a pneumatic tire with reduced noise according to a second embodiment of the present invention, and FIG. 3B is a side- sectional view illustrating a sound-absorbing material of a pneumatic tire with reduced noise according to a second embodiment of the present invention;
FIG. 4 is a graph showing cavity noise in tires during cleat impact testing, with respect to a tire of Comparative Example and a tire according to the present invention; and
FIG. 5 is an SEM image showing a surface of a sound-absorbing material of the pneumatic tire with reduced noise according to the present invention.

### DETAILED DESCRIPTION OF THE INVENTION

Hereinafter, preferred embodiments of the present invention will be described in more detail with reference to the annexed drawings. In the drawings, the same elements are denoted by the same reference numerals, if possible. In the following description of the present invention, a detailed description of known functions and configurations incorporated herein will be omitted when it may make the subject matter of the present invention rather unclear. For the same reason, some elements may be exaggerated, omitted or schematically shown in the annexed drawings.

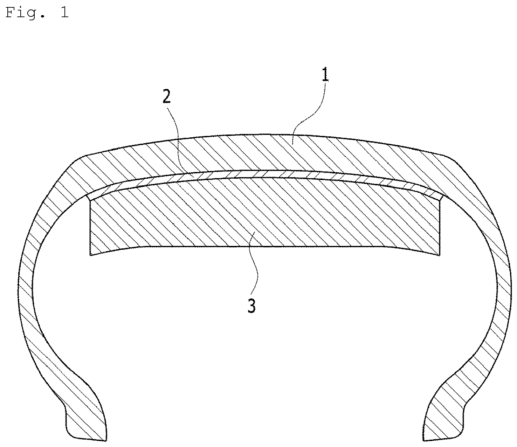

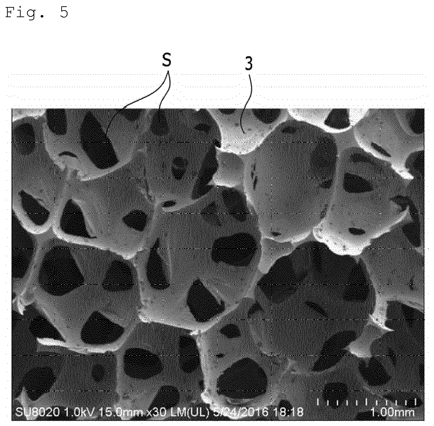

FIG. 1 is a side-sectional view illustrating a pneumatic tire with reduced noise according to the present invention. Referring to FIG. 1, the pneumatic tire 1 according to the present invention includes a porous sound-absorbing layer 3 made of polyurethane having open cells, which is adhered to an inside surface of an inner liner by an adhesive layer 2. The open cell S is formed on the surface of the sound-absorbing material 3, as shown in the SEM image of FIG. 5, and the open cell S preferably has a size (longitudinal length) of 500 µm to 1,300 µm and a thickness (depth) of 20 µm to 100 µm. When the size and thickness of the open cell S are excessively small or large, not within these ranges, it is confirmed that the effect of reducing cavity noise is not high.

The adhesive agent 2 is a sealant-based adhesive agent and includes butyl rubber, polyisobutylene, an inorganic additive and a vulcanizing agent, and optionally further includes other additives. The adhesive agent 2 may be selected from various common adhesive agents.

The porous sound-absorbing material 3 functions to reduce generation of cavity noise in a tire and is strongly adhered by an adhesive agent 2 with high adhesivity. The porous sound-absorbing material 3 made of polyurethane has a density of 0.015 g/cm³ to 0.06 g/cm³. The porous sound-absorbing material 3 may be any one of various common porous members and may be selected from sponge, polyester non-woven fabrics, polystyrene-based non-woven fabrics and laminates thereof.

The sound-absorbing material 3 is continuously connected in a circumferential direction in the tire and is disposed such that an adhesion starting point finally contacts an adhesion end point, or is spaced from the adhesion end point so as to face each other, a volume of the sound-absorbing material is 14% to 26% with respect to the total volume of the tire, wherein the total volume of the tire is defined as a volume of an area extending from a bottom surface of a tread to under a rim, the maximum width of the sound-absorbing material is 35% to 60% with respect to the width of the tire tread, and the surface area of the sound-absorbing material is 10% to 50% with respect to the surface area of the rim of the wheel on the surface of the inner liner to which the sound-absorbing material is adhered.

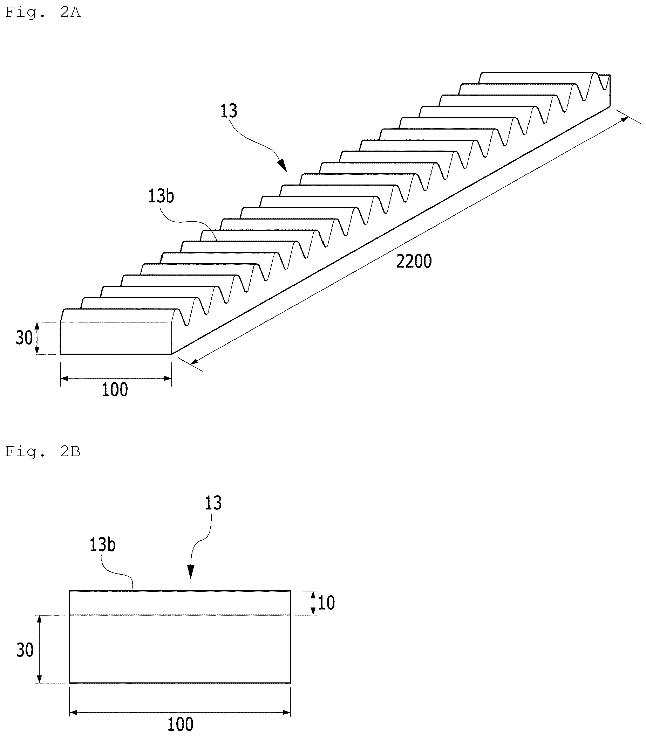

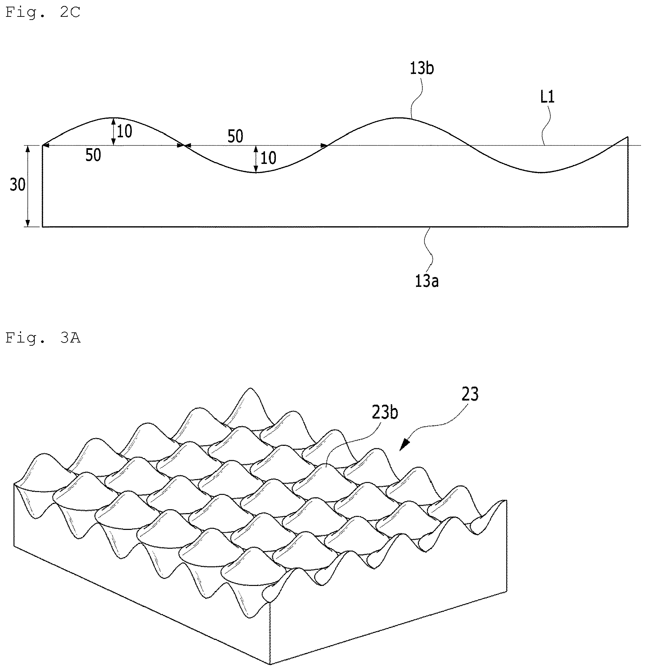

FIG. 2A is a perspective view of a pneumatic tire with reduced noise according to a first embodiment of the present invention, FIG. 2B is a cross-sectional view of a pneumatic tire with reduced noise according to a first embodiment of the present invention, and FIG. 2C is a partial side-sectional view of a pneumatic tire with reduced noise according to a first embodiment of the present invention. The sound-absorbing material 13 according to the first embodiment has a flat bottom surface (inner liner surface) 13a and a top surface 13b which includes ridges and valleys regularly or irregularly disposed in the circumferential direction, in which the tire rotates, that is, in a length direction, wherein the highest points of the ridges and the lowest points of the valleys are equal distances from a central height line of variation so that the sound-absorbing material 13 has the same volume as conventional one, but has an irregular top surface where air flows.

Regarding the first embodiment shown in FIG. 2A, FIG. 2B, FIG. 2C, the minimum height of the sound-absorbing material 13 is preferably 10% and specifically should be 30 to 50%, with respect to the maximum height of the sound-absorbing material 13 in a spot contacting the surface of the inner liner, and the distance between maximum height spots or minimum height spots in the circumferential (length) direction is 1 to 20 cm, more specifically, 5 to 15 cm. The maximum height spots or minimum height spots are rounded in order to endure deformation.

The bottom surface 13a of the sound-absorbing material 13 has a flat area to make the area of the sound-absorbing material as large as possible so as to improve adhesivity between the inner liner of the tire and the sound-absorbing material.

FIG. 3A is a partial perspective view illustrating a sound-absorbing material of a pneumatic tire with reduced noise according to a second embodiment. The sound-absorbing material 23 according to the second embodiment has a flat bottom surface (inner liner surface) and a top surface 23b which has a matrix shape of alternately disposed ridges and valleys with different heights in a left or right diagonal line direction with respect to the circumferential direction, in which the tire rotates, that is, in a length direction, so that cavity noise generated by impact of the tire during driving can be reduced on the surface of the sound-absorbing material with irregular heights.

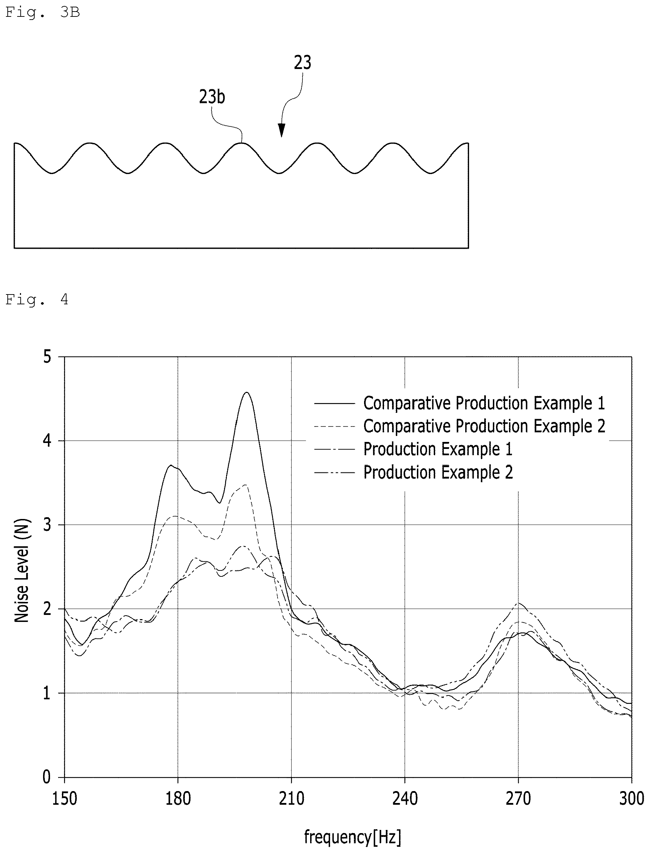

Regarding the second embodiment shown in FIG. 3A, FIG. 3B, the minimum height of the sound-absorbing material 23 is preferably 30% to 80% and specifically should be 40 to 70%, with respect to the maximum height of the sound-absorbing material 23 in a spot contacting the surface of the inner liner, the distance between maximum height spots or minimum height spots in the circumferential (length) direction is 1 to 10 cm, more specifically, 2 to 5 cm, and the maximum height and the minimum height are inclined at an angle of 40 to 50 degrees and the maximum height spots or minimum height spots are rounded in order to endure deformation.

The pneumatic tire according to the present invention may be an automobile tire, a racing tire, an airplane tire, an agricultural machine tire, an off-the road tire, a truck tire, a bus tire or the like. In addition, the tire may be a radial tire or a bias tire, preferably, a radial tire.

Hereinafter, Production Examples, Comparative Production Examples to be comparatively tested with Production Examples, and Test Examples to test Production Examples and Comparative Production Examples according to the present invention will be described so that a person having ordinary knowledge in the field to which the present invention pertains can easily implement the present invention. However, the present invention can be implemented in various embodiments and is not limited to the examples described herein.

### [Production Example: Production of Tire]

Sound-absorbing materials 13 and 23 for reducing noise in accordance with the sizes shown in FIG. 2A, FIG. 2B, FIG. 2C (Production Example 1) and FIG. 3A, 3B (Production Example 2) are adhered such that an adhesive agent 2 faces an inside surface of an inner liner of a 245/45R19 tire (produced by Hankook Tire Group), as shown in FIG. 1, to produce tires. The material for the sound-absorbing material was a porous polyurethane material (density of 0.06 g/cm³).

### [Test Example 1: Determination of noise reduction with increasing speed]

Cleat impact testing was conducted on the tire produced in Production Example. The cleat impact testing as measured by measuring cavity noise in the tire using a cleat impact testing system while passing through a cleat at a predetermined interval.

In order to compare effects with the tires according to the present invention, a general tire was set at Comparative Production Example 1, a sound-absorbing material having a rectangular shape was set at Comparative Production Example 2, and the result measured under the conditions including a different top shape from the sound-absorbing material and the same volume as Comparative Production Example 2 is shown in FIG. 4.

Referring to FIG. 4, as a result of cleat impact testing, the tire of Comparative Production Example 1 showed a cavity noise peak in a tire primary resonance frequency range (200 to 300 Hz) increasing noise, while the tire of Production Example according to the present invention did not show cavity noise. Furthermore, noise generated in each Production Example had a lower noise frequency and a lower sound pressure than in Comparative Production Example 1. These results indicate that tires of Production Example according to the present invention generate less noise with low sound pressure.

In addition, after driving, adhesion of the sound-absorbing material and adhesion of the adhesive agent (sealant) were observed by the naked eye. As a result, the tire according to Production Example include the sound-absorbing material and the adhesive agent which were effectively bonded thereto.

The pneumatic tire with reduced noise using the sound-absorbing material having a certain size and shape, according to the present invention, can more effectively reduce noise in the tire by changing noise energy causing resonance and a frequency generated thereby.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A pneumatic tire with reduced cavity noise comprising:
a porous sound-absorbing material adhered by an adhesive agent layer to an inside surface of an inner liner disposed in a tread layer in the tire,
wherein the sound-absorbing material is continuously extended in a circumferential direction in the tire and is disposed such that an adhesion starting point finally contacts an adhesion end point, or is spaced from the adhesion end point so as to face each other,
the sound-absorbing material has an open cell on a surface thereof,
a volume of the sound-absorbing material is 14% to 26% with respect to a total volume of the tire, wherein the total volume of the tire is defined as a volume of an area extending from a bottom surface of a tread to under a rim, and
a maximum width of the sound-absorbing material is 35% to 60% with respect to a width of the tire tread and a surface area of the sound-absorbing material is 10% to 50% with respect to a surface area of the rim of a wheel on the surface of the inner liner to which the sound-absorbing material is adhered.

2. The pneumatic tire with reduced cavity noise according to claim 1, wherein a top surface of the sound-absorbing material has a height which is regularly or irregularly disposed in a width or length direction with respect to a circumferential direction, in which the tire rotates.

3. The pneumatic tire with reduced cavity noise according to claim 1, wherein the open cell has a size of 500 µm to 1,300 µm, and
the open cell has a thickness (depth) of 20 µm to 100 µm.

4. The pneumatic tire with reduced cavity noise according to claim 2, wherein the sound-absorbing material has a flat bottom surface (inner liner surface) and a top surface which has a plurality of ridges and valleys regularly or irregularly arranged and alternately disposed in the circumferential direction, in which the tire rotates, wherein the highest points of the ridges and the lowest points of the valleys are equal distances from a central height line of variation.

5. The pneumatic tire with reduced cavity noise according to claim 2, wherein the sound-absorbing material has a flat bottom surface (inner liner surface) and a top surface which has alternately disposed ridges and valleys with different heights in a left or right diagonal line direction with respect to the circumferential direction, in which the tire rotates, so that cavity noise generated by impact of the tire during driving is reduced on the surface of the sound-absorbing material with irregular heights.
